(19) Europäisches Patentamt

European Patent Office

Office européen des brevets

(11) EP 0 953 851 A2

(12) EUROPEAN PATENT APPLICATION

(43) Date of publication:
03.11.1999 Bulletin 1999/44

(51) Int Cl.⁶: G01S 13/04

(21) Application number: 99303225.9

(22) Date of filing: 26.04.1999

(84) Designated Contracting States:
AT BE CH CY DE DK ES FI FR GB GR IE IT LI LU
MC NL PT SE
Designated Extension States:
AL LT LV MK RO SI

(30) Priority: 29.04.1998 GB 9809039
15.03.1999 GB 9905934

(71) Applicant: Mitel Semiconductor Limited
Swindon, Wiltshire SN2 2QW (GB)

(72) Inventors:
• Redfern, Steven William
Eagle, Lincoln LN6 3LF (GB)
• Mallett, James Dougal
Rainworth, Mansfield, Notts NG21 OEL (GB)

(74) Representative: Pratt, David Martin et al
Withers & Rogers,
Goldings House,
2 Hays Lane
London SE1 2HW (GB)

(54) Direct sequence spread spectrum radar

(57) A radar sensor comprises a bi-directional bi-phase modulator 11 arranged to modulate a modulating code, provided by a pseudo-random sequence generator 4, onto an RF signal, and transmit the modulated signal from an antenna 3. Reflected signals are received by the antenna 3 and are correlated by the modulator 11 with the modulated signal. An output signal is given at an output 12 of the correlation indicates that there is movement of an object within a short distance of the antenna 3. The distance-sensitivity characteristics of the sensor can be adjusted by control of the sequence clock 5, which controls the chip rate of the modulating code. The coverage of the radar sensor can be further controlled through the use of a dual patch antenna arrangement having a desired radiation pattern (Figure 4).

Fig.1.

## Description

The present invention relates to a radar sensor which is suitable for automotive security or monitoring applications, but which could also be used for non-automotive applications.

Short range radar sensors currently use a very basic unmodulated system architecture, which has the advantage of simplicity and low component count in the radio-frequency (RF) section, but which has performance limitations which render it unsuitable for further development. Also, any additional circuitry (e.g. muting circuits for emc protection) which is added to cope with some of these limitations tends to increase the product cost and impact upon reliability.

For example, an existing continuous wave Doppler sensor uses a homodyne receiver and amplitude modulation detector which is very susceptible to in-band interference, and will detect any unwanted signal amplitude changes within the receiver bandwidth. Such may be interference from microwave ovens, diathermy equipment and so on. The functional failure mode in most cases is an alarm trigger, which is highly undesirable and must be eliminated or significantly improved in any new design. However, receiver blocking would not be an acceptable failure mode either, as this would constitute a weakness in an overall security system which could be exploited to defeat it.

Current systems exhibit an approximate $1/range^4$ target detection sensitivity characteristic (by virtue of the expected square law decay and a round trip distance of double the target range). In a vehicle application, effective coverage and sensitivity tends to be limited by the need to minimise interference from large targets outside the required detection envelope (such as garage doors and large vehicles), and a means to reduce the response to external targets by hard limiting range is seen as the best way of dealing with this problem.

In order to improve the emc immunity performance, a method of reducing the system response to any amplitude modulated signal in the RF band is required.

In order to limit the radar response to targets within a given unambiguous range, a system bandwidth of $1/\tau$ is required, where $\tau$ is the signal delay time to the target and back again. Signals returning after time $\tau$ are ignored. For typical vehicle security applications, this is a requirement of several 10s of MHz. Conventionally, range limiting has often been achieved using pulsed amplitude radars with fast timing circuitry to select the required range gate - an impulse radar is a simple form of such a system. Frequency Modulation Continuous Wave (FMCW) systems with the appropriate sweep pattern can also be used. However, it is not necessary for the car alarm sensor to gate range accurately, or provide a very sharp detection boundary, as long as considerable enhancement of the range curve can be achieved.

In accordance with the present invention, there is provided a spread-spectrum radar sensor, comprising a bi-phase modulator arranged to modulate an RF carrier signal with a modulating code, and an antenna arranged to transmit the modulated signal and to receive reflected signals, the modulator being arranged to correlate the reflected signals with the transmitted signals.

This radar sensor may be inexpensive to manufacture because of its simple construction. Also, the dynamic range of the sensor is easily controllable, for example through adjustment of the frequency of the modulating code, and thus is particularly suited to short range security or monitoring applications.

The modulating code may be a pseudo-random code, which is preferably a maximal length code or a Gold code. This may make the sensor less susceptible to interference from large targets outside of the dynamic range of the sensor where the code is a maximal length code. Where it is a Gold code, the sensor may be less sensitive to interference from radar sensors operating nearby.

The antenna may be a patch antenna arrangement, which preferably includes two or more patches. Combining the effects of antenna beamshaping and zero bit delay correlation in this way may result in a radar sensor which is substantially insensitive to events outside of a detection envelope. Also, the detection envelope is likely to exist primarily in a well defined volume, with rapid fall-off at the periphery of the volume. In a security application, this reduces the possibility of false alarms from targets outside the protected area.

Where the antenna includes two or more patches, the phase centre of the antenna pattern may be shifted from the orthogonal axis of the antenna arrangement. This allows adjustment of the detection envelope so that a desired volume may be better covered.

A radar sensor in accordance with the present invention will now be described, by way of example, with reference to the accompanying drawings, of which:-

Figure 1 shows diagrammatically a monostatic spread spectrum radar sensor in accordance with this invention;

Figure 2 shows graphically distance/sensitivity relationships for different set-ups;

Figure 3 shows a double-balanced mixer used in the Figure 1 sensor;

Figure 4 shows auto-correlation of a pseudo random code; and

Figure 5 shows sensitivity loss versus distance for a pseudo random code.

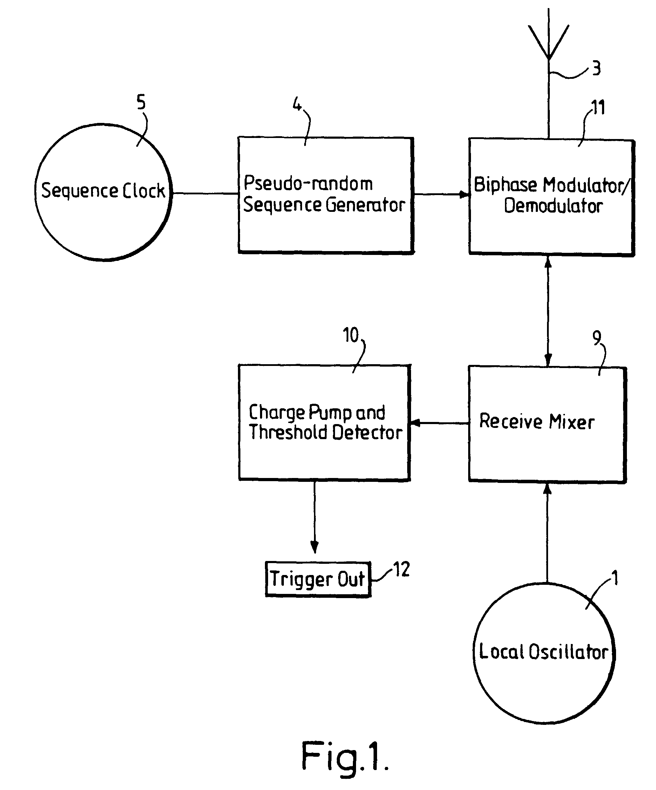

Referring to Figure 1, the monostatic spread spectrum radar system is shown having an antenna 3 connected to a biphase modulator/demodulator 11, which in turn is connected to a receive mixer 9. Signals provided by a local oscillator 1, which is connected to the receive mixer 9, are modulated in the modulator 11 with signals provided by a pseudo-random sequence generator 4. The modulated signals are transmitted by the antenna 3. The pseudo-random generator 4 may be a clocked shift register, a look-up table in a ROM, or any other suitable device. The rate at which the code is provided is dependent on, and controlled by, a sequence clock 5 which is connected to the generator 4. Of course, the frequency of the clock 5 has an effect on the sensitivity-versus-distance characteristic, and on the spectral distribution of the r.f. signal transmitted by the antenna 3. The signal provided by the modulator 11 is a Binary phase shift keying (BPSK) signal.

A detector circuit 10, connected to receive detection signals provided on an output of the receive mixer 9, is arranged to provide an output signal to an output terminal 12 on detection of an alarm worthy condition. The detector 10 may be an a.c. coupled amplifier with a charge pump integrator and a threshold comparator. The threshold comparator provides an output signal on detection of the detection signals exceeding a predetermined threshold. The charge pump prevents short duration signals triggering the provision of the output signal. The correlated signal provided by the modulator 11 includes also a d.c. component which could be used for distance measurement for static targets to accommodate permanent changes in the clutter-background (e. g. seat position in a car etc.)

The modulator/demodulator 11 acts as a 'zero bit' delay correlator on the signals received by the antenna 3. The system dynamic range is limited by the compression point of the modulator 11 and the saturation point of the receive mixer 9. Hence, only low power levels can be used. The zero-bit correlation causes the detection sensitivity to rapidly drop-off with increasing distance from the antenna 3. Such an arrangement is thus ideal for short range applications such as vehicle interior intruder alarms.

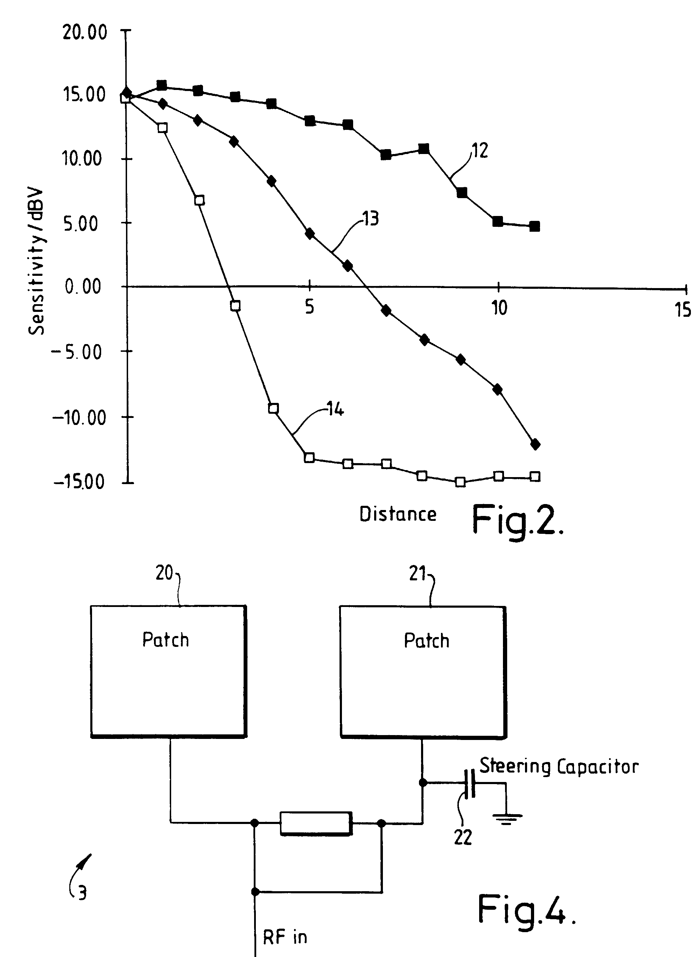

Referring now to Figure 2, in comparison with the range sensitivity 12 of a c.w. Doppler sensor, the curves 13 and 14 show the effects of increasing clock rate in a direct sequence spread spectrum modulated sensor arrangement, the curve 13 being for a 30 MHz clock rate and the curve 14 for a 60 MHz clock rate.

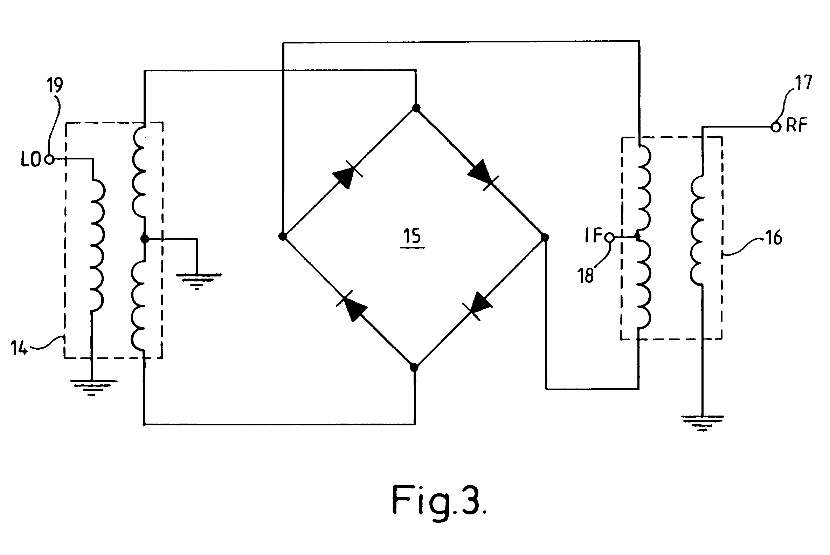

The modulator/demodulator 11 is preferably a double-balanced mixer such as that shown in Figure 3. Referring to Figure 3, the mixer comprises first and second balanced-to-unbalanced transformers 14 and 16, a balanced diode ring 15, an RF terminal 17, an Intermediate Frequency (IF) terminal 18, and an Local Oscillator (LO) terminal 19 connected as shown. The mixer 11 has some particularly significant properties and characteristics. The mixer 11 is bidirectional, symmetrical at RF, has a low insertion loss and is capable of handling the output power level of the oscillator with no distortion.

Under normal operation as a mixer, signals applied to the LO terminal 19 are suppressed at the RF terminal 17 and vice versa. Signals applied to the IF terminal 18 appear as upconverted sidebands on the suppressed carrier at the RF terminal 17.

When a bipolar digital input signal is applied to the IF terminal 18, the diodes of the ring 15 are caused to be alternately switched on and off in such a way that the phase relationship between the transformer windings causes a 180° phase shift in the signal received at the LO terminal 19. This causes unbalancing of the ring 15, the effects of which feed through to the RF terminal 17. The double balanced mixer thus functions as a phase modulator, which, because it is symmetrical, is bidirectional and functions equally well in both directions.

The IF terminal 18 is connected to the pseudo-random generator 4, the LO terminal 19 is connected to the receive mixer 9 and the RF terminal 17 is connected to the antenna 3.

The Figure 3 double-balanced mixer has the additional advantage of being inherently broadband. Its bandwidth is limited only by the performance of the transformers 14 and 16.

For example the Mini-Circuits (™) ADE-18W double balanced mixer is suitable for use as the mixer 11 at the 2.45 GHz ISM band.

Without any phase modulation or coding, and ignoring multipath efforts, signals reflected from a radar target (not shown) will vary by 12 dB per distance octave. The inclusion of a modulation code causes additional losses in reflected signals. These losses are close to 0dB when the radar target is near to the antenna 3, and are equal to the levels of the sidelobes of the code when the antenna is distant from the radar target. Clearly, the frequency of the clock generator 5, and the sequence of the pseudo-random code provided by the generator 4, need to be selected having the requirements of the particular application in mind.

Where the application is a vehicle intrusion alarm sensor, high sensitivity is required within a vehicle, so that small moving objects can be detected, and low sensitivity is required outside of the vehicle so that large objects moving outside the vehicle do not trigger a false alarm. The detection envelope of the radar sensor is restricted further by the use of antenna beamshaping. This beam shaping is, to a significant extent, a result of the design of the antenna 3.

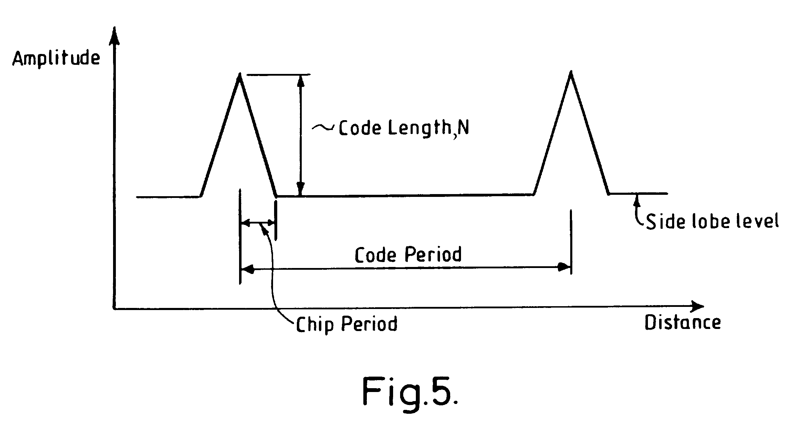

Referring to Figure 4, the antenna 3 comprises an arrangement of two square or rectangular microstrip patch antennae 20 and 21 aligned in the y-axis. In this way, the phase centre of the composite antenna pattern can be shifted from the orthogonal axis of the antenna array. Shifting can be achieved through the use of different lengths of transmission line feeding the antennae, or by using series or shunt reactive components, such as a capacitor 22, to alter the relative phases of the signals of the antennae. Such an antenna arrangement is commonly referred to as a phased array antenna. One example is disclosed in co-pending UK Patent Application No. 2322029. The combined effects of the antenna beamshaping and the pseudo-random modulation code provide improved immunity to false alarms caused by out-of-range moving objects.

The sensitivity of the radar sensor to targets depends to a large extent on the pseudo random code generated by the generator 4. In the case of a perfect code, with no bandwidth limitations, the auto-correlation of the code is that shown in Figure 5.

As can be seen from Figure 5, the auto-correlation is at a peak at zero distance from the antenna 3, 0dB additional loss being provided at this distance. At distances greater than that corresponding to the chip period, the additional loss provided is equal to the sidelobe level of the pseudo-random code. Of course, another peak occurs at a distance corresponding to the code period. If the frequency of the modulating code, that is the frequency at which the clock 5 causes the code to be provided from the generator 4, is F MHz, the distance $D_T$ corresponding to the chip period is 150/2F metres. The additional loss provided by a perfectly random code of length N at a distance D metres is approximately:

$$20 \log [D_T/D_T - D]dB$$

where $D < D_T$

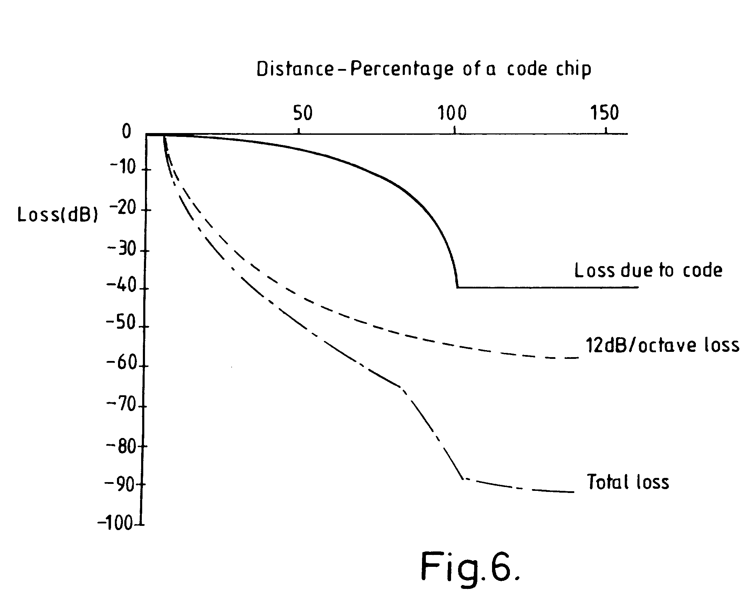

The sidelobe level provided by a maximal length code is equal to 20 logN. Combining the additional loss due to the pseudo-random code with the 12dB per octave loss resulting from radio propagation provides a sensitivity characteristic as shown in Figure 6.

In Figure 6, the sidelobe level is set at 40dB, corresponding to a perfect code of length 100 chips. In practice, implementation issues mean that such high sidelobe additional losses are not easily achievable, and lower losses must be settled for. Also, non-perfect codes cause non-regular sidelobe levels. Average loss of 30 dB can be expected from a 1000 chip code length although, at certain distances, the loss may be as low as 22dB.

Sidelobe levels provided by Gold codes are limited to well defined levels. For this reason, their use may be preferred even though their average loss is not as high as that provided by a random code.

Because it is possible that two or more radar sensor systems will be operating in reasonably close proximity, the cross-correlation properties of codes may be important. To be taken into consideration are the facts that maximal length codes do not have any special cross-correlation properties (their cross-correlation properties are, in all relevant respects, the same as the cross-correlation properties of pseudo-random codes), and that the good cross-correlation properties of Gold codes are only retained if the integration time is an integer multiple of the code period time. Also, there are relatively few maximal length codes (the number is approximately equal to the square root of the length of the code), whereas the number of Gold codes is much greater. The best way to avoid interference from adjacent radar sensors may be in the antenna arrangement design. System performance may be maximised only by taking these factors into account.

A maximal length code of 1024 bits length driven by a clock of 60 MHz is considered to be a reasonable compromise between radar sensor complexity, cost and system performance for a saloon vehicle interior.

Of course, the balanced mixer 11 of Figure 3 may be omitted in favour of a single balanced mixer, a switched-line phase shifter, or any other type of bi-phase modulator.

The monostatic spread spectrum radar sensor when implemented in a vehicle security arrangement shows significant improvement in false alarm margin, particularly against large external targets such as metalsided vans and garage doors outside the vehicle.

The radar sensor may find application in, for example, movement detectors for automatic door opening systems. In this case, the antenna 3 may be mounted above a door and may be sensitive to moving objects only in the approach to the door.

**Claims**

1. A spread-spectrum radar sensor comprising: a biphase modulator arranged to modulate a RF carrier signal with a modulating code, and an antenna arranged to transmit the modulated signal and to receive reflected signals, the modulator being arranged to correlate the reflected signals with the transmitted signals.

2. A radar sensor according to claim 1, in which the RF carrier signal is provided by a local oscillator, and a mixer is connected between the modulator and the local oscillator, the mixer providing output detection signals.

3. A radar sensor according to claim 2, in which the detection signals are provided to a threshold detector, which provides an output signal on detection of the detection signals exceeding a predetermined threshold.

4. A radar sensor according to claim 3, further comprising a charge pump, connected to the threshold detector, by which short duration detection signals are prevented from triggering provision of the output signal.

5. A radar sensor according to any preceding claim, in which the bi-phase modulator is a double-balanced mixer.

6. A radar sensor according to any preceding claim, in which the modulating code is a pseudo-random code.

7. A radar sensor according to claim 6, in which the modulating code is a Gold code.

8. A radar sensor according to claim 6, in which the modulating code is a maximal length code.

9. A radar sensor according to any preceding claim, in which the antenna is a patch antenna arrangement.

10. A radar sensor according to claim 9, in which the antenna arrangement includes two or more patches.

11. A radar sensor according to claim 10, in which the phase centre of the antenna pattern is shifted from the orthogonal axis of the antenna arrangement.

12. A short range moving object detection system including a radar sensor according to any preceding claim

13. A vehicle interior sensor including a radar sensor according to any of claims 1 to 12.

Fig.1.

Fig.2.

Fig.4.

Fig.3.

Fig.5.

Distance-Percentage of a code chip

Fig.6.

EP 0 953 851 A2